# EUROPEAN PATENT APPLICATION

(11) **EP 4 842 005 A1**
(43) Date of publication of application: **18.11.2026**
(21) Application number: 24915879.1
(22) Date of filing: 08.01.2024
(51) Int. Cl.: H04N 23/71

(54) **IMAGE BRIGHTNESS ADJUSTMENT METHOD AND APPARATUS**

(71) Applicant: Leica Microsystems CMS GmbH, 35578 Wetzlar (DE); Leica Microsystems (Suzhou) Technology Co., Ltd., Suzhou, Jiangsu 215024 (CN)
(72) Inventor: JIAO, Linqi, Suzhou, Jiangsu 215024 (CN); WANG, Xin, Suzhou, Jiangsu 215024 (CN)
(74) Representative: Schaumburg und Partner Patentanwälte mbB
(86) International application number: PCT/CN2024/071057
(87) International publication number: WO 2025/147796

(57) **Abstract**

The present disclosure proposes an image brightness adjustment method, apparatus, and storage medium. The method is applied to an image brightness adjustment apparatus in communication with a camera and microscope and comprising a first brightness adjustment mode, the method comprising: in the first brightness adjustment mode, determining the brightness level of the image; and determining a set of control parameters corresponding to the image according to the brightness level, wherein the set of control parameters comprises light intensity, the exposure time of the camera, and gain, and there is a preset correspondence between the brightness level and the set of control parameters.

## Description

### Technical Field

The present disclosure relates to image processing technology, and in particular, to an image brightness adjustment method and apparatus.

### Background Art

Image brightness refers to the brightness of an image. Images taken by a camera being too bright or too dark will affect later use. Currently, when adjusting image brightness, a common method is to adjust control parameters associated with image brightness such that the image captured by the camera has appropriate image brightness.

### Summary of the Invention

The present application discloses an image brightness adjustment method and apparatus, providing a brightness adjustment mode that, when adjusting the image brightness of an acquired or displayed image, does not require the user to adjust multiple control parameters individually, thereby facilitating accurate image brightness adjustment by the user.

An embodiment of the first aspect of the present disclosure provides an image brightness adjustment method, applied to an image brightness adjustment apparatus. The image brightness adjustment apparatus is in communication with a camera and comprises a first brightness adjustment mode. The method comprises: in the first brightness adjustment mode, determining the brightness level of the image; and adjusting a set of control parameters corresponding to the image according to the brightness level, wherein the set of control parameters comprises light intensity, the exposure time of the camera, and gain, and there is a preset correspondence between the brightness level and the set of control parameters.

Optionally, the brightness level is linearly correlated with the brightness of the image.

Optionally, the image brightness adjustment apparatus is also in communication with a microscope. For different imaging modes of the microscope, the preset correspondence between the brightness level and the set of control parameters is different; adjusting the set of control parameters corresponding to the image comprises: determining the imaging mode of the microscope; and adjusting the set of control parameters corresponding to the image according to the brightness level and the imaging mode of the microscope.

Optionally, for different application scenarios of the image, the preset correspondence between the brightness level and the set of control parameters is different; adjusting the set of control parameters corresponding to the image comprises: determining the application scenario of the image; and adjusting the set of control parameters corresponding to the image according to the brightness level and the application scenario of the image.

Optionally, the application scenarios comprise viewing the image and capturing the image.

Optionally, the image brightness adjustment apparatus is further in communication with a microscope, and determining the brightness level of the image comprises: determining the brightness level according to the user's following operations: rotation of a knob of the microscope; and an input operation.

Optionally, the image adjustment apparatus further comprises a second brightness adjustment mode in which the rotation of a knob of the microscope is used to determine any one control parameter in the set of control parameters.

Optionally, determining the brightness level of the image comprises: calculating the brightness level according to the various control parameters currently corresponding to the image.

Optionally, the image adjustment apparatus further comprises a second brightness adjustment mode, and calculating the brightness level according to the various control parameters currently corresponding to the image comprises: when switching from the second brightness adjustment mode to the first brightness adjustment mode, calculating the brightness level according to the various control parameters of the image in the second brightness adjustment mode.

An embodiment of the second aspect of the present disclosure provides an image brightness adjustment apparatus. The image brightness adjustment apparatus is in communication with the camera and comprises a first brightness adjustment mode. The apparatus comprises: a determination module for determining, in the first brightness adjustment mode, the brightness level of the image; and an adjustment module for adjusting a set of control parameters corresponding to the image according to the brightness level, wherein the set of control parameters comprises light intensity, the exposure time of the camera, and gain, and there is a preset correspondence between the brightness level and the set of control parameters.

Optionally, the brightness level is linearly correlated with the brightness of the image.

Optionally, the image brightness adjustment apparatus is also in communication with a microscope. For different imaging modes of the microscope, the preset correspondence between the brightness level and the set of control parameters is different; the adjustment module is used for: determining the imaging mode of the microscope; and adjusting the set of control parameters corresponding to the image according to the brightness level and the imaging mode of the microscope.

Optionally, for different application scenarios of the image, the preset correspondence between the brightness level and the set of control parameters is different; the adjustment module is used for: determining the application scenario of the image; and adjusting the set of control parameters corresponding to the image according to the brightness level and the application scenario of the image.

Optionally, the application scenarios comprise viewing the image and capturing the image.

Optionally, at least one of the control parameters in the set of control parameters corresponding to the brightness level within a specific numerical range is fixed.

Optionally, the image brightness adjustment apparatus is further in communication with a microscope, and the determination module is used for: determining the brightness level according to the user's following operations: rotation of a knob of the microscope; and an input operation.

Optionally, the image adjustment apparatus further comprises a second brightness adjustment mode in which the rotation of a knob of the microscope is used to determine any one control parameter in the set of control parameters.

Optionally, the determination module is used for: calculating the brightness level according to the various control parameters currently corresponding to the image.

Optionally, the image adjustment apparatus further comprises a second brightness adjustment mode, and the determination module is used for: when switching from the second brightness adjustment mode to the first brightness adjustment mode, calculating the brightness level according to the various control parameters of the image in the second brightness adjustment mode.

The third aspect of the present disclosure provides an image brightness adjustment device, comprising: a processor; and a memory, used for the storage of instructions executable by the processor; wherein, when the instructions are executed by the processor, the processor is used for the execution of the image brightness adjustment method according to the embodiment of the first aspect described above.

An embodiment of the fourth aspect of the present disclosure proposes a computer-readable storage medium, which has instructions stored thereon, and when the instructions are executed by a processor, the image brightness adjustment method according to the embodiment of the first aspect described above can be realized.

An embodiment of the present disclosure provides an image brightness adjustment method and apparatus to determine the brightness level of an image in a first brightness adjustment mode and determine a set of control parameters corresponding to the image based on the image brightness level. As such, the present disclosure provides a technical solution for adjusting the brightness of an acquired or displayed image without the need for the user to adjust multiple control parameters individually, thereby facilitating accurate image brightness adjustment by the user.

Additional aspects and advantages of the present disclosure will be given in part in the following description and part will become apparent from the following description or may be learned by practice of the present disclosure.

### Brief Description of the Drawings

The above and/or additional aspects and advantages of the present disclosure will become apparent and easy to understand from the following description of embodiments with reference to the attached drawings, in which:
FIG. 1 is a schematic flowchart of an image brightness adjustment method according to an embodiment of the present disclosure;
FIG. 2 is a schematic flowchart of another image brightness adjustment method according to an embodiment of the present disclosure;
FIG. 3 is a schematic flowchart of another image brightness adjustment method according to an embodiment of the present disclosure;
FIG. 4 is a schematic flowchart of another image brightness adjustment method according to an embodiment of the present disclosure;
FIG. 5 is a schematic flowchart of another image brightness adjustment method according to an embodiment of the present disclosure;
FIG. 6 is a schematic structural diagram of an image brightness adjustment apparatus provided by an embodiment of the present disclosure;
FIG. 7 is a schematic structural diagram of a system for realizing an image brightness adjustment method provided by an embodiment of the present disclosure.

### Detailed Description of the Embodiments

Embodiments of the present disclosure are described in detail below, and examples of the embodiments are shown in the attached drawings, wherein the same or similar reference signs throughout denote the same or similar elements or elements having the same or similar functions. The embodiments described below with reference to the attached drawings are exemplary and intended to explain the present disclosure and should not be construed as a limitation on the present disclosure.

It should be noted that the terms "first," "second," etc. in the Description and Claims of the present disclosure and in the aforementioned attached drawings are used to distinguish between similar objects and are not necessarily used to describe a specific order or sequence. It should be understood that the data so used may be interchanged under appropriate circumstances so that the embodiments of the present disclosure described herein can be implemented in an order other than those illustrated or described herein. The embodiments described in the following exemplary embodiments do not represent all embodiments consistent with the present disclosure. On the contrary, they are merely examples of the apparatus and method consistent with some aspects of the present disclosure as detailed in the attached Claims.

Image brightness refers to the brightness of an image. Images taken by a camera being too bright or too dark will affect later use. Currently, when adjusting image brightness, a common method is to adjust control parameters associated with image brightness such that the image captured by the camera has appropriate image brightness.

However, since image brightness is affected by multiple control parameters, and the user is often unclear about how various control parameters affect image brightness, the user often needs to repeatedly adjust multiple control parameters on a trial-and-error basis to find suitable control parameters, which makes it inconvenient and difficult for the user to accurately adjust image brightness.

To this end, the present application provides an image brightness adjustment method, an apparatus, and a computer-readable storage medium to determine the brightness level of the image in a first brightness adjustment mode and adjust a set of control parameters corresponding to the image according to the image brightness level. As such, the present disclosure provides a technical solution for adjusting the brightness of an acquired or displayed image without the need for the user to adjust multiple control parameters individually, thereby facilitating accurate image brightness adjustment by the user.

The image brightness adjustment method and apparatus provided by the present application will be described in detail below with reference to the attached drawings.

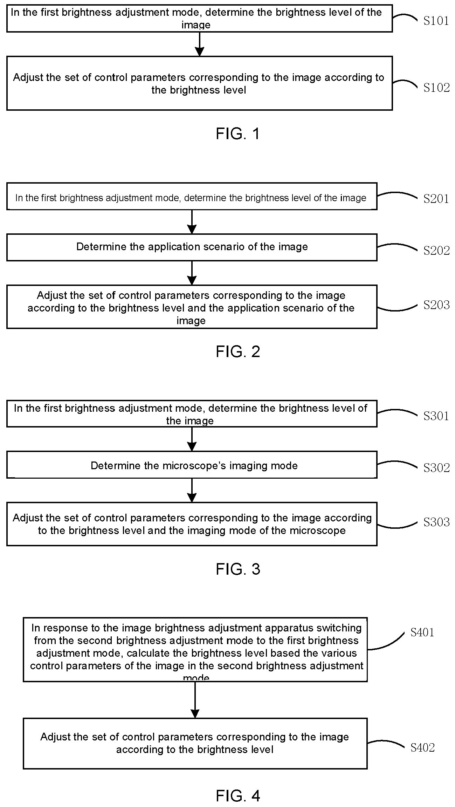

FIG. 1 is a schematic flowchart of an image brightness adjustment method according to an embodiment of the present disclosure. As shown in FIG. 1, the method may be performed by an image brightness adjustment apparatus. The image brightness adjustment apparatus is in communication with the camera, and the image brightness adjustment apparatus has a first brightness adjustment mode. The method may comprise, but is not limited to, the following steps:
Step S101: In the first brightness adjustment mode, determine the brightness level of the image.

In some embodiments, the brightness level of the image is linearly correlated with the brightness of the image.

Exemplarily, the brightness level of an image may be divided into 100 brightness levels, i.e., levels 1-100, with the brightness changes being the same between adjacent levels. For example, the change in brightness from level 1 to level 2 is the same as the change in brightness from level 2 to level 2. As such, uniform variations in brightness may be achieved by step-by-step adjustment of the brightness level.

In some embodiments, determining the brightness level of the image comprises: determining the brightness level according to the user's input operation.

Exemplarily, a user may perform an input operation on a display page of the image brightness adjustment apparatus, according to which the brightness level may be determined.

For example, a user may enter 20 in a brightness level input box on the display page, whereby the user's desired brightness level may be determined to be level 20.

In some embodiments, the image brightness adjustment apparatus is in communication with a microscope, and determining the brightness level of the image comprises: determining the brightness level according to the user's rotation of a knob of the microscope.

Exemplarily, the user may increase or decrease the brightness level by rotating a knob of the microscope. For example, in the first brightness adjustment mode, the current brightness level is level 5. When the user rotates the knob clockwise by a preset angle, the brightness level increases by 1 to become level 6; and when the user rotates the knob counterclockwise by a preset angle, the brightness level decreases by 1 to become level 4.

In some embodiments, the image brightness adjustment apparatus further has a second brightness adjustment mode in which the rotation of a knob of the microscope is used to determine any one control parameter in the set of control parameters.

Exemplarily, when the image brightness adjustment apparatus is in the second brightness adjustment mode, the user may increase or decrease the light intensity by rotating a knob of the microscope.

In some embodiments, determining the brightness level of the image comprises: calculating the brightness level according to the various control parameters currently corresponding to the image.

Exemplarily, when the image brightness adjustment apparatus first activates the first brightness adjustment mode, the brightness level may be calculated based on the various control parameters currently corresponding to the image.

For example, the numerical values of the various control parameters corresponding to the image are as follows: the light intensity is 10, the exposure time is 50, and the gain is 5; when the first brightness adjustment mode is turned on for the image, the brightness level can be determined by substituting the values of the control parameters into a preset calculation formula. For example, the brightness level may be determined to be level 15.

In some embodiments, the image brightness adjustment apparatus further has a second brightness adjustment mode, and when the image brightness adjustment apparatus switches from the second brightness adjustment mode to the first brightness adjustment mode, the brightness level is calculated based on the various control parameters of the image in the second brightness adjustment mode.

The user may first adjust the brightness of the image by adjusting the numerical values of the various control parameters in the second brightness adjustment mode; for example, the numerical values of the various control parameters adjusted by the user are as follows: the light intensity is 20, the exposure time is 100, and the gain is 5. The second brightness adjustment mode is then switched to the first brightness adjustment mode. In this case, based on a preset calculation formula, the numerical values of the various control parameters last adjusted by the user in the second brightness adjustment mode (light intensity of 20, exposure time of 100, and gain of 5) may be substituted to determine the brightness level. For example, the brightness level may be determined to be level 25.

The preset calculation formula is predetermined based on experience.

Step S102: Adjust the set of control parameters corresponding to the image according to the brightness level.

The set of control parameters comprises light intensity, exposure time of the camera, gain, etc., and there is a preset correspondence between the brightness level and the set of control parameters.

In some embodiments, the image brightness adjustment apparatus may store a preset correspondence between the brightness level and the set of control parameters. After determining the brightness level, the set of control parameters corresponding to the determined brightness level may be adjusted based on the preset correspondence, thereby adjusting the brightness of the image.

In some embodiments, at least one of the control parameters in the set of control parameters corresponding to the brightness level within a specific numerical range is fixed.

Considering that fluorescence can disrupt transfection brightness and that gain can affect image quality, in this embodiment, in the preset correspondence between the brightness level and the set of control parameters, the numerical range of the brightness level is divided, and for brightness levels in different numerical ranges, different control parameters are changed to balance image quality and brightness adjustment time while protecting the sample from damage.

Exemplarily, the brightness level of an image may be divided into 100 brightness levels, and in the set of control parameters corresponding to a certain segment of brightness levels, only one control parameter may change. For example, in the set of control parameters corresponding to levels 1-10, the light intensity and exposure time remain unchanged, and only the gain changes. For example, the light intensity is 10, the exposure time is 50, and the gain may be increased from 1 to 5; in the set of control parameters corresponding to levels 10-20, the light intensity and gain remain unchanged, and only the exposure time changes. For example, the light intensity is 10, the exposure time is increased from 50 to 100, and the gain is 5; in the set of control parameters corresponding to levels 20-30, the exposure time and gain remain unchanged, and only the light intensity changes. For example, the light intensity is increased from 10 to 20, the exposure time is 100, and the gain is 5.

In some embodiments, the image brightness adjustment apparatus is also in communication with a microscope. In some embodiments, the microscope may have different imaging modes, such as a fluorescence imaging mode or a harmonic imaging mode. For different imaging modes of the microscope, the preset correspondence between the brightness level and the set of control parameters is different; adjusting the set of control parameters corresponding to the image comprises: determining the imaging mode of the microscope; and adjusting the set of control parameters corresponding to the image according to the brightness level and the imaging mode of the microscope.

Considering the effect of different imaging modes on image brightness, in this embodiment, different correspondences between the brightness level and the set of control parameters are set for different imaging modes of the microscope. For example, in a first imaging mode, a first correspondence is set; in a second imaging mode, a second correspondence is set.

When adjusting the set of control parameters corresponding to the image, the imaging mode of the microscope is first determined, and then the set of control parameters corresponding to the image is adjusted according to the brightness level and the imaging mode of the microscope. For example, when the imaging mode of the microscope is determined to be the first imaging mode, the set of control parameters corresponding to the image is adjusted according to the brightness level based on the first correspondence; and when the imaging mode of the microscope is determined to be the second imaging mode, the set of control parameters corresponding to the image is adjusted according to the brightness level based on the second correspondence.

In some embodiments, for different application scenarios of the image, the preset correspondence between the brightness level and the set of control parameters is different; adjusting the set of control parameters corresponding to the image comprises: determining the application scenario of the image; and adjusting the set of control parameters corresponding to the image according to the brightness level and the application scenario of the image.

In some embodiments, the application scenarios comprise viewing the image and capturing the image.

The image brightness adjustment method of the present application may be applied to different scenarios, such as viewing an image or capturing an image. The requirements for image brightness differ in different application scenarios.

Considering the impact of different application scenarios on the brightness of the image, in this embodiment, for different application scenarios, different correspondences between the brightness level and the set of control parameters are set. For example, in the scenario of viewing an image, a first correspondence is set; in the scenario of capturing an image, a second correspondence is set.

When adjusting the set of control parameters corresponding to the image, the application scenario of the image is first determined, and then the set of control parameters corresponding to the image is adjusted according to the brightness level and the application scenario. For example, when the application scenario of an image is determined to be viewing the image, the set of control parameters corresponding to the image is adjusted according to the brightness level based on the first correspondence; and when the imaging mode of the microscope is determined to be the second imaging mode, the set of control parameters corresponding to the image is adjusted according to the brightness level based on the second correspondence.

The image brightness adjustment method provided by the embodiments of the present disclosure determines the brightness level of an image in a first brightness adjustment mode and adjusts a set of control parameters corresponding to the image based on the image brightness level. As such, the present disclosure provides a technical solution for adjusting the brightness of an acquired or displayed image without the need for the user to adjust multiple control parameters individually, thereby facilitating accurate image brightness adjustment by the user.

The information processing method involved in the embodiments of the present disclosure may comprise at least one of steps S101 to S102.

In the embodiments of the present disclosure, some or all of the steps and their optional implementation methods can be arbitrarily combined with some or all of the steps in other embodiments and can also be arbitrarily combined with the optional implementation methods of other embodiments.

FIG. 2 is a schematic flowchart of another image brightness adjustment method according to an embodiment of the present disclosure. As shown in FIG. 2, the method may be performed by an image brightness adjustment apparatus. The image brightness adjustment apparatus is in communication with the camera, and the image brightness adjustment apparatus has a first brightness adjustment mode. The method may comprise, but is not limited to, the following steps:
Step S201: In the first brightness adjustment mode, determine the brightness level of the image.

For a detailed introduction of step S201, reference can be made to the description of step S101 in the above embodiment, which will not be repeated here.

Step S202: Determine the application scenario of the image.

In some embodiments, the application scenarios of the image comprise viewing the image and capturing the image.

Step S203: Adjust the set of control parameters corresponding to the image according to the brightness level and the application scenario of the image.

The set of control parameters comprises light intensity, exposure time of the camera, gain, etc., and there is a preset correspondence between the brightness level and the set of control parameters.

The image brightness adjustment method of the present application may be applied to different scenarios, such as viewing an image or capturing an image. The requirements for image brightness differ in different application scenarios.

Considering the impact of different application scenarios on the brightness of the image, in this embodiment, for different application scenarios, different correspondences between the brightness level and the set of control parameters are set. For example, in the scenario of viewing an image, a first correspondence is set; in the scenario of capturing an image, a second correspondence is set.

After determining the application scenario of the image, the set of control parameters corresponding to the image is adjusted according to the brightness level and the application scenario of the image.

For example, when the application scenario of an image is determined to be viewing the image, the set of control parameters corresponding to the image is adjusted according to the brightness level based on the first correspondence; and when the imaging mode of the microscope is determined to be the second imaging mode, the set of control parameters corresponding to the image is adjusted according to the brightness level based on the second correspondence.

The image brightness adjustment method provided by the embodiments of the present disclosure determines the brightness level of an image in a first brightness adjustment mode and adjusts a set of control parameters corresponding to the image based on the image brightness level. As such, the present disclosure provides a technical solution for adjusting the brightness of an acquired or displayed image without the need for the user to adjust multiple control parameters individually, thereby facilitating accurate image brightness adjustment by the user.

FIG. 3 is a schematic flowchart of another image brightness adjustment method according to an embodiment of the present disclosure. As shown in FIG. 3, the method may be performed by an image brightness adjustment apparatus. The image brightness adjustment apparatus is in communication with the camera and a microscope, and the image brightness adjustment apparatus has a first brightness adjustment mode. The method may comprise, but is not limited to, the following steps:
Step S301: In the first brightness adjustment mode, determine the brightness level of the image.

For a detailed introduction of step S301, reference can be made to the description of step S101 in the above embodiment, which will not be repeated here.

Step S302: Determine the imaging mode of the microscope.

In some embodiments, the microscope may have different imaging modes, such as a fluorescence imaging mode or a harmonic imaging mode.

Step S303: Adjust the set of control parameters corresponding to the image according to the brightness level and the imaging mode of the microscope.

The set of control parameters comprises light intensity, exposure time of the camera, gain, etc., and there is a preset correspondence between the brightness level and the set of control parameters.

Considering the effect of different imaging modes on image brightness, in this embodiment, different correspondences between the brightness level and the set of control parameters are set for different imaging modes of the microscope. For example, in a first imaging mode, a first correspondence is set; in a second imaging mode, a second correspondence is set.

After determining the imaging mode of the microscope, the set of control parameters corresponding to the image is adjusted according to the brightness level and the imaging mode of the microscope.

For example, when the imaging mode of the microscope is determined to be the first imaging mode, the set of control parameters corresponding to the image is adjusted according to the brightness level based on the first correspondence; and when the imaging mode of the microscope is determined to be the second imaging mode, the set of control parameters corresponding to the image is adjusted according to the brightness level based on the second correspondence.

The image brightness adjustment method provided by the embodiments of the present disclosure determines the brightness level of an image in a first brightness adjustment mode and adjusts a set of control parameters corresponding to the image based on the image brightness level. As such, the present disclosure provides a technical solution for adjusting the brightness of an acquired or displayed image without the need for the user to adjust multiple control parameters individually, thereby facilitating accurate image brightness adjustment by the user.

FIG. 4 is a schematic flowchart of another image brightness adjustment method according to an embodiment of the present disclosure. As shown in FIG. 4, the method may be performed by an image brightness adjustment apparatus. The image brightness adjustment apparatus is in communication with the camera and a microscope, and the image brightness adjustment apparatus has a first brightness adjustment mode and a second brightness adjustment mode. The method may comprise, but is not limited to, the following steps:
Step S401: In response to the image brightness adjustment apparatus switching from the second brightness adjustment mode to the first brightness adjustment mode, calculate the brightness level based the various control parameters of the image in the second brightness adjustment mode.

When the image brightness adjustment apparatus switches from the second brightness adjustment mode to the first brightness adjustment mode, the brightness level is calculated based on the various control parameters of the image in the second brightness adjustment mode.

The user may first adjust the brightness of the image by adjusting the numerical values of the various control parameters in the second brightness adjustment mode; for example, the numerical values of the various control parameters adjusted by the user are as follows: the light intensity is 20, the exposure time is 100, and the gain is 5. The second brightness adjustment mode is then switched to the first brightness adjustment mode. In this case, based on a preset calculation formula, the numerical values of the various control parameters last adjusted by the user in the second brightness adjustment mode (light intensity of 20, exposure time of 100, and gain of 5) may be substituted to determine the brightness level. For example, the brightness level may be determined to be level 25.

The preset calculation formula is predetermined based on experience.

In some embodiments, the brightness level of the image is linearly correlated with the brightness of the image.

Exemplarily, the brightness level of an image may be divided into 100 brightness levels, i.e., levels 1-100, with the brightness changes being the same between adjacent levels. For example, the change in brightness from level 1 to level 2 is the same as the change in brightness from level 2 to level 2. As such, uniform variations in brightness may be achieved by step-by-step adjustment of the brightness level.

In some embodiments, the brightness level is adjusted based on the user's rotation of a knob of the microscope.

Exemplarily, the user may increase or decrease the brightness level by rotating a knob of the microscope. For example, in the first brightness adjustment mode, the current brightness level is level 5. When the user rotates the knob clockwise by a preset angle, the brightness level increases by 1 to become level 6; and when the user rotates the knob counterclockwise by a preset angle, the brightness level decreases by 1 to become level 4.

Step S402: Adjust the set of control parameters corresponding to the image according to the brightness level.

The set of control parameters comprises light intensity, exposure time of the camera, gain, etc., and there is a preset correspondence between the brightness level and the set of control parameters.

For a detailed introduction of step S402, reference can be made to the description of step S102 in the above embodiment, which will not be repeated here.

The image brightness adjustment method provided by the embodiments of the present disclosure determines the brightness level of an image in a first brightness adjustment mode and adjusts a set of control parameters corresponding to the image based on the image brightness level. As such, the present disclosure provides a technical solution for adjusting the brightness of an acquired or displayed image without the need for the user to adjust multiple control parameters individually, thereby facilitating accurate image brightness adjustment by the user.

The information processing method involved in the embodiments of the present disclosure may comprise at least one of steps S401 to S402.

In the embodiments of the present disclosure, some or all of the steps and their optional implementation methods can be arbitrarily combined with some or all of the steps in other embodiments and can also be arbitrarily combined with the optional implementation methods of other embodiments.

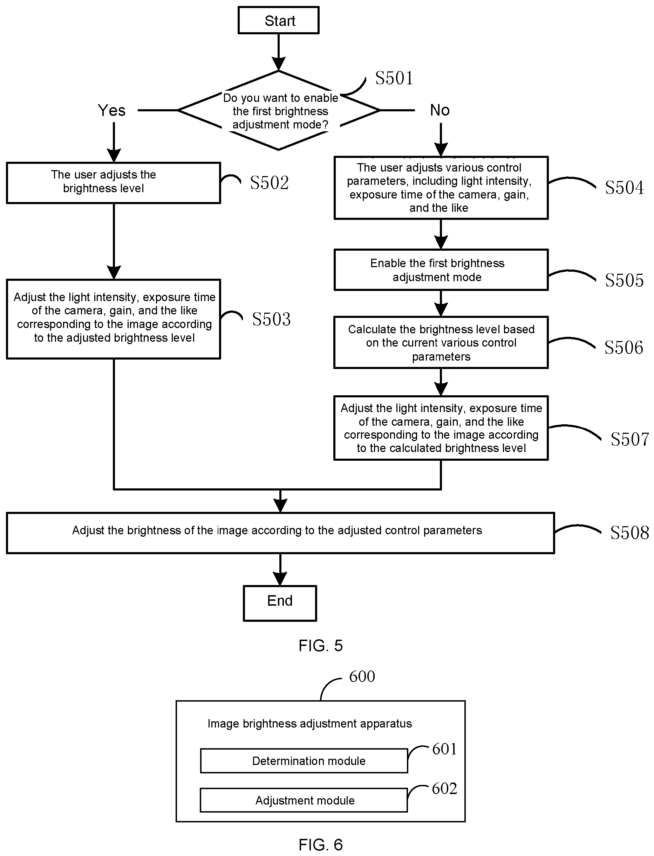

FIG. 5 is a schematic flowchart of another image brightness adjustment method according to an embodiment of the present disclosure. As shown in FIG. 5, the method may comprise, but is not limited to, the following steps:
Step S501: Confirm whether the first brightness adjustment mode is enabled. If the first brightness adjustment mode is enabled, proceed to step S502. If the first brightness adjustment mode is not enabled, proceed to step S504.
Step S502: The user adjusts the brightness level.
Step S503: Adjust the set of control parameters corresponding to the image according to the adjusted brightness level. The set of control parameters comprises light intensity, exposure time of the camera, gain, and the like.
Step S504: The user adjusts various control parameters, including light intensity, exposure time of the camera, gain, and the like.
Step S505: Enable the first brightness adjustment mode.
Step S506: Calculate the brightness level according to the current various control parameters.
Step S507: Adjust the set of control parameters corresponding to the image according to the calculated brightness level.
Step S508: Adjust the brightness of the image according to the adjusted control parameters.

The embodiments of the present disclosure also propose an apparatus for realizing any of the above methods. For example, an apparatus is proposed, and this apparatus comprises units or modules for implementing each step in any of the above methods.

It should be understood that the division of each unit or module in the apparatus is only a division of logical functions, and in actual realization, they can be fully or partially integrated into one physical entity, or they can be physically separate. In addition, the units or modules in the apparatus can be realized in the form of a processor calling software: For example, the apparatus comprises a processor, and the processor is connected to a memory. Instructions are stored in the memory, and the processor calls the instructions stored in the memory to realize any of the above methods or to implement the functions of each unit or module of the apparatus, wherein, the processor is, for example, a general-purpose processor such as a central processing unit (CPU) or a microprocessor, and the memory is a memory within the apparatus or a memory external to the apparatus. Alternatively, the units or modules in the apparatus can be realized in the form of a hardware circuit, and the functions of some or all of the units or modules can be realized through the design of the hardware circuit. The above-mentioned hardware circuit can be understood as one or more processors, for example, in one implementation, the above-mentioned hardware circuit is an application-specific integrated circuit (ASIC), and through the design of the logical relationships of components within the circuit, the functions of some or all of the above units or modules are implemented. For another example, in another implementation, the above-mentioned hardware circuit can be realized by a programmable logic device (PLD), and taking a field programmable gate array (FPGA) as an example, it can comprise a large number of logic gate circuits, and the connection relationships between the logic gate circuits are configured through a configuration file, thereby realizing the functions of some or all of the above units or modules. All units or modules of the above apparatus can be fully realized in the form of a processor calling software, or fully realized in the form of a hardware circuit, or partially implemented in the form of a processor calling software, with the remaining part being realized in the form of a hardware circuit.

In the embodiments of the present disclosure, a processor is a circuit with signal processing capabilities, and in one implementation, the processor can be a circuit with instruction reading and execution capabilities, such as a central processing unit (CPU), a microprocessor, a graphics processing unit (GPU) (which can be understood as a microprocessor), or a digital signal processor (DSP). In another implementation, the processor can realize certain functions through the logical relationships of a hardware circuit, and the logical relationships of the above-mentioned hardware circuit are fixed or reconfigurable. For example, the processor is a hardware circuit realized by an application-specific integrated circuit (ASIC) or a programmable logic device (PLD) such as an FPGA. In a reconfigurable hardware circuit, the process of the processor loading a configuration document to realize the hardware circuit configuration can be understood as the process of the processor loading instructions to realize the functions of some or all of the above units or modules. In addition, it can also be a hardware circuit designed for artificial intelligence, which can be understood as an ASIC, for example, a neural network processing unit (NPU), a tensor processing unit (TPU), or a deep learning processing unit (DPU).

FIG. 6 is a structural schematic view of an image brightness adjustment apparatus provided by an embodiment of the present disclosure; as shown in FIG. 6, the image brightness adjustment apparatus (600) may comprise a determination module (601) and an adjustment module (602).

The determination module (601) is used to determine the brightness level of an image in the first brightness adjustment mode.

The adjustment module (602) is used to adjust a set of control parameters corresponding to the image according to the brightness level, wherein the set of control parameters comprises light intensity, the exposure time of the camera, and gain, and there is a preset correspondence between the brightness level and the set of control parameters.

Optionally, the brightness level is linearly correlated with the brightness of the image.

Optionally, the image brightness adjustment apparatus is also in communication with a microscope. For different imaging modes of the microscope, the preset correspondence between the brightness level and the set of control parameters is different; the adjustment module (602) is used for: determining the imaging mode of the microscope; and adjusting the set of control parameters corresponding to the image according to the brightness level and the imaging mode of the microscope.

Optionally, for different application scenarios of the image, the preset correspondence between the brightness level and the set of control parameters is different; the adjustment module (602) is used for: determining the application scenario of the image; and adjusting the set of control parameters corresponding to the image according to the brightness level and the application scenario of the image.

Optionally, the application scenarios comprise viewing the image and capturing the image.

Optionally, at least one of the control parameters in the set of control parameters corresponding to the brightness level within a specific numerical range is fixed.

Optionally, the image brightness adjustment apparatus is further in communication with a microscope, and the determination module (601) is used for: determining the brightness level according to the user's following operations: rotation of a knob of the microscope; and an input operation.

Optionally, the image adjustment apparatus further comprises a second brightness adjustment mode in which the rotation of a knob of the microscope is used to determine any one control parameter in the set of control parameters.

Optionally, the determination module (601) is used for: calculating the brightness level according to the various control parameters currently corresponding to the image.

Optionally, the image adjustment apparatus further comprises a second brightness adjustment mode, and the determination module (601) is used for: when switching from the second brightness adjustment mode to the first brightness adjustment mode, calculating the brightness level according to the various control parameters of the image in the second brightness adjustment mode.

The image brightness adjustment apparatus provided by the embodiments of the present disclosure determines the brightness level of an image in a first brightness adjustment mode and determines a set of control parameters corresponding to the image based on the image brightness level. As such, the present disclosure provides a technical solution for adjusting the brightness of an acquired or displayed image without the need for the user to adjust multiple control parameters individually, thereby facilitating accurate image brightness adjustment by the user.

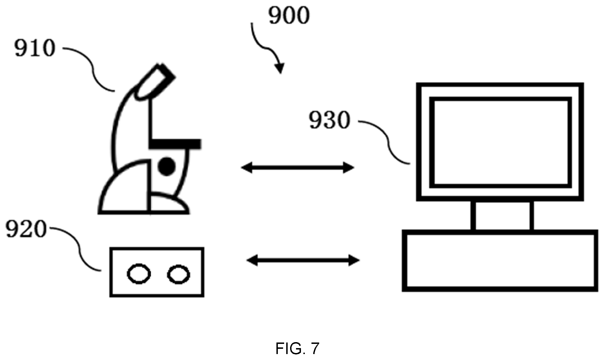

Some embodiments relate to a microscope. FIG. 7 is a schematic diagram of a system (900) configured to perform the method described in the present invention. The system (900) comprises a microscope (910), a camera (920), and a computer system (930). The camera is configured to capture non-fluorescent images, and the microscope (910) is configured to acquire fluorescent images, with these being connected to the computer system (930). The computer system (930) is configured to perform at least a part of the method described in the present invention. The computer system (930) can be configured to execute machine learning algorithms. The computer system (930), the microscope (910), and the camera (920) can be separate entities, but can also be integrated into a common housing. The computer system (930) can be part of the central processing system of the microscope (910), and/or the computer system (930) and the camera (920) can be part of a sub-assembly of the microscope (910), such as a sensor, actuator, camera, or illumination unit of the microscope (910).

The computer system (930) can be a local computer device (e.g., a personal computer, laptop, tablet or mobile phone) with one or more processors and one or more storage devices, or it can also be a distributed computer system (e.g., with one or more processors and one or more storage devices distributed across various locations, such as a local client and/or one or more remote server sites and/or data centers). The computer system (930) may comprise any circuit or combination of circuits. In one embodiment, the computer system (930) may comprise one or more processors, which can be of any type. As used herein, a processor may refer to any type of computing circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), a multi-core processor, or a field programmable gate array (FPGA) of, for example, a microscope or a microscope component (e.g., a camera) or any other type of processor or processing circuit. Other types of circuits that may be included in the computer system (930) may be custom circuits or application specific integrated circuits (ASICs), such as one or more circuits (e.g., communication circuits) used in wireless devices such as mobile phones, tablets, laptops, two-way radios, and similar electronic systems. The computer system (930) may comprise one or more storage devices, which may comprise one or more storage elements suitable for a particular application, such as main memory in the form of random access memory (RAM), one or more hard disk drives, and/or one or more drives for handling removable media, such as optical discs (CDs), flash memory cards, and digital video discs (DVDs). The computer system (930) may also comprise a display device, one or more speakers, and a keyboard and/or controller, which may comprise a mouse, trackball, touch screen, voice recognition device, or any other device that allows a system user to input information to the computer system (930) or receive information from the computer system (930).

Some or all of the method steps may be performed by (or using) a hardware device (e.g., a processor, a microprocessor, a programmable computer, or an electronic circuit). In some embodiments, such a device may perform one or more of the most important steps of the method.

Depending on certain implementation requirements, embodiments of the present invention may be implemented in hardware or in software. The implementation can be carried out using a non-transitory storage medium (such as a digital storage medium, e.g., a floppy disk, DVD, Blu-ray, CD, ROM, PROM, EPROM, EEPROM, or FLASH) having electronically readable control signals stored thereon, which work in tandem (or are capable of working) with a programmable computer system so as to perform the corresponding method. Therefore, a digital storage medium may be computer-readable.

Some embodiments of the present invention comprise a data carrier having electronically readable control signals, which are capable of working in tandem with a programmable computer system so as to perform one of the methods described herein.

Generally, an embodiment of the present invention can be implemented as a computer program product with a program code, the program code being operative for performing one of the methods when the computer program product runs on a computer. The program code may for example be stored on a machine-readable carrier.

Other embodiments include a computer program for performing one of the methods described herein, stored on a machine-readable carrier.

In other words, an embodiment of the present invention is therefore a computer program having a program code for performing one of the methods described herein when the computer program runs on a computer.

Therefore, a further embodiment of the present invention is a storage medium (or a data carrier, or a computer-readable medium) on which the computer program is stored for performing one of the methods described herein when it is executed by a processor. The data carrier, digital storage medium, or recorded medium is typically tangible and/or non-transitory. A further embodiment of the present invention is an apparatus as described herein, comprising a processor and a storage medium.

Therefore, a further embodiment of the present invention is a data stream or a signal sequence representing a computer program for performing one of the methods described herein. The data stream or signal sequence may for example be configured to be transferred via a data communication connection, for example via the Internet.

A further embodiment comprises a processing means, for example a computer or a programmable logic device, which is configured or adapted to perform one of the methods described herein.

A further embodiment comprises a computer on which a computer program for performing one of the methods described herein is installed.

A further embodiment of the present invention comprises an apparatus or a system configured to transfer (e.g., electronically or optically) a computer program for performing one of the methods described herein to a receiver. The receiver may, for example, be a computer, a mobile device, or a memory device. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may work in tandem with a microprocessor in order to perform one of the methods described herein. In general, the methods are preferably performed by any hardware apparatus.

As used herein, the term "and/or" includes any and all combinations of one or more of the associated listed items and may be abbreviated as "/".

Although some aspects have been described in the context of an apparatus, it is clear that these aspects also represent a description of the corresponding method, wherein a block or device corresponds to a method step or a feature of a method step. Similarly, aspects described in the context of a method step also represent a description of a corresponding block or item or feature of a corresponding apparatus.

## Claims

1. An image brightness adjustment method, applied to an image brightness adjustment apparatus, wherein the image brightness adjustment apparatus is in communication with a camera and comprises a first brightness adjustment mode, and the method comprises:
in the first brightness adjustment mode, determining the brightness level of an image; and
adjusting a set of control parameters corresponding to the image according to the brightness level, wherein the set of control parameters comprises light intensity, the exposure time of the camera, and gain, and there is a preset correspondence between the brightness level and the set of control parameters.

2. The method according to Claim 1, wherein the brightness level is linearly correlated with the brightness of the image.

3. The method according to Claim 1 or 2, wherein the image brightness adjustment apparatus is also in communication with a microscope, and for different imaging modes of the microscope, the preset correspondence between the brightness level and the set of control parameters is different;
adjusting the set of control parameters corresponding to the image comprises:
determining the imaging mode of the microscope; and
adjusting the set of control parameters corresponding to the image according to the brightness level and the imaging mode of the microscope.

4. The method according to any one of Claims 1-3, wherein, for different application scenarios of the image, the preset correspondence between the brightness level and the set of control parameters is different;
adjusting the set of control parameters corresponding to the image comprises:
determining the application scenario of the image; and
adjusting the set of control parameters corresponding to the image according to the brightness level and the application scenario of the image.

5. The method according to Claim 4, wherein the application scenarios comprise viewing the image and capturing the image.

6. The method according to any one of Claims 1-5, wherein at least one of the control parameters in the set of control parameters corresponding to the brightness level within a specific numerical range is fixed.

7. The method according to any one of Claims 1-6, wherein the image brightness adjustment apparatus is further in communication with a microscope, and determining the brightness level of the image comprises:
determining the brightness level according to the user's following operations:
rotation of a knob of the microscope;
and an input operation.

8. The method according to Claim 7, wherein the image adjustment apparatus further comprises a second brightness adjustment mode in which the rotation of a knob of the microscope is used to determine any one control parameter in the set of control parameters.

9. The method according to any one of Claims 1-6, wherein determining the brightness level of the image comprises:
calculating the brightness level according to the various control parameters currently corresponding to the image.

10. The method according to Claim 9, wherein the image adjustment apparatus further comprises a second brightness adjustment mode, and calculating the brightness level according to the various control parameters currently corresponding to the image comprises:
when switching from the second brightness adjustment mode to the first brightness adjustment mode, calculating the brightness level according to the various control parameters of the image in the second brightness adjustment mode.

11. An image brightness adjustment apparatus, wherein the image brightness adjustment apparatus is in communication with a camera and comprises a first brightness adjustment mode, the apparatus comprising:
a determination module used to determine the brightness level of an image in the first brightness adjustment mode; and
an adjustment module used to adjust a set of control parameters corresponding to the image according to the brightness level, wherein the set of control parameters comprises light intensity, the exposure time of the camera, and gain, and there is a preset correspondence between the brightness level and the set of control parameters.

12. The apparatus according to Claim 11, wherein the brightness level is linearly correlated with the brightness of the image.

13. The apparatus according to Claim 11 or 12, wherein the image brightness adjustment apparatus is also in communication with a microscope, and for different imaging modes of the microscope, the preset correspondence between the brightness level and the set of control parameters is different;
the adjustment module being used for:
determining the imaging mode of the microscope; and
adjusting the set of control parameters corresponding to the image according to the brightness level and the imaging mode of the microscope.

14. The apparatus according to any one of Claims 11-13, wherein, for different application scenarios of the image, the preset correspondence between the brightness level and the set of control parameters is different;
the adjustment module being used for:
determining the application scenario of the image; and
adjusting the set of control parameters corresponding to the image according to the brightness level and the application scenario of the image.

15. The apparatus according to Claim 14, wherein the application scenarios comprise viewing the image and capturing the image.

16. The apparatus according to any one of Claims 11-15, wherein at least one of the control parameters in the set of control parameters corresponding to the brightness level within a specific numerical range is fixed.

17. The apparatus according to any one of Claims 11-16, wherein the image brightness adjustment apparatus is further in communication with a microscope, and the determination module is used for:
determining the brightness level according to the user's following operations:
rotation of a knob of the microscope;
and an input operation.

18. The apparatus according to Claim 17, wherein the image adjustment apparatus further comprises a second brightness adjustment mode in which the rotation of a knob of the microscope is used to determine any one control parameter in the set of control parameters.

19. The apparatus according to any one of Claims 11-16, wherein the determination module is used for:
calculating the brightness level according to the various control parameters currently corresponding to the image.

20. The apparatus according to Claim 19, wherein the image adjustment apparatus further comprises a second brightness adjustment mode, and the determination module is used for:
when switching from the second brightness adjustment mode to the first brightness adjustment mode, calculating the brightness level according to the various control parameters of the image in the second brightness adjustment mode.

21. An image brightness adjustment device, comprising:
a processor;
a memory, used for the storage of instructions executable by the processor;
wherein, when the instructions are executed by the processor, the processor is used to perform the method according to any one of Claims 1-10.

22. A computer-readable storage medium, with instructions being stored thereon, and when the instructions are executed by a processor, the processor is used to perform the method according to any one of Claims 1-10.
